# EUROPEAN PATENT SPECIFICATION

(11) **EP 0 770 276 B1**
(45) Date of publication and mention of the grant of the patent: **14.04.1999**
(21) Application number: 95923363.6
(22) Date of filing: 04.07.1995
(51) Int. Cl.: H02G 7/00

(54) **MARKER BALL TO BE FASTENED ON A WIRE AND METHOD FOR MOUNTING OF THE BALL**
WARNKUGEL FÜR LEITUNGSKABEL UND VERFAHREN ZUR MONTAGE DAVON
SPHERE DE MARQUAGE DESTINEE A ETRE FIXEE SUR UN CABLE, ET PROCEDE DE MONTAGE DE LA SPHERE

(30) Priority: 11.07.1994 FI 943292
(43) Date of publication of application: 02.05.1997
(73) Proprietor: Ensto Sekko Oy, 06100 Porvoo (FI)
(72) Inventor: TURUNEN, Harri, FIN-07900 Loviisa (FI)
(74) Representative: Ollikainen, Rauno Johannes
(86) International application number: FI9500385
(87) International publication number: WO9602077

(56) References cited:
- WO-A-92/19033

## Description

The present invention relates to a marker ball fastenable to a wire from the ground or a boat for facilitating the detection of the wire, the ball comprising a top spherical cap and a bottom spherical cap with a division plane therebetween for bringing the wire inside a generally C-shaped mounting element and for fastening the same against the mounting element by means of a clamping screw gripping the mounting element.

A marker ball of the invention can be fastened to a live or dead open or coated suspension wire by means of a voltage-resistant working rod or a like.

The invention relates also to a method for mounting a marker ball on a live wire from the ground or a boat.

The long baring distances or spans required for crossing water courses create a variety of problems. Being difficult to detect, the wires turn into death traps for many large and rather rare water birds, such as swans and Canadian geese. Also the masts of sailboats are often sufficiently high to reach the wires and the risk of accident increases if the wires are not clearly marked. In addition, the swaying of wires over long spans may lead to a hazard of neighboring wires clashing together, the marker balls being capable of preventing the collision of neighboring phase advances.

The presently available marker balls or other marking devices (e.g. a spiral wound around a wire) have a design that prevents the mounting thereof on a live wire. For example, voltage breaks induced in 20 kV - 110 kV lines are expensive, which often precludes or postpones the mounting of marker balls in locations where such balls are obviously needed.

Patent application WO9219033 discloses a marker device, comprising as basic elements common with the present invention, two spherical caps, clamping elements and a releasable carrying means. The structural design, mutual relation and functioning of these basic elements of the known device, however, differ from those of the present invention e.g. in respect of the following features. The clamping elements include a link arm mechanism or a threaded shaft turned by an electric motor. The spherical caps are side by side with vertically oriented gap therebetween before clamping. The device is carried by the carrying means by a lifting device such as a helicopter, crane etc. Guide bars may be used to guide the device to correct position relative to the line. The carrying means can not be released from the clamping elements until these elements have grasped the line fasteningly and closed together the spherical caps.

An object of the invention is to provide a novel type of marker ball, having a design which enables convenient mounting of the ball even on a live wire by using a long mounting rod suitable for voltage work.

This object is achieved by means of a marker ball with characterizing features set forth in the appended claim 1. Claim 5 discloses a mounting method which is rendered possible by the marker ball of the invention. Furthermore, the non-independent claims disclose details relating to the design and implementation of the most preferred embodiment of the invention.

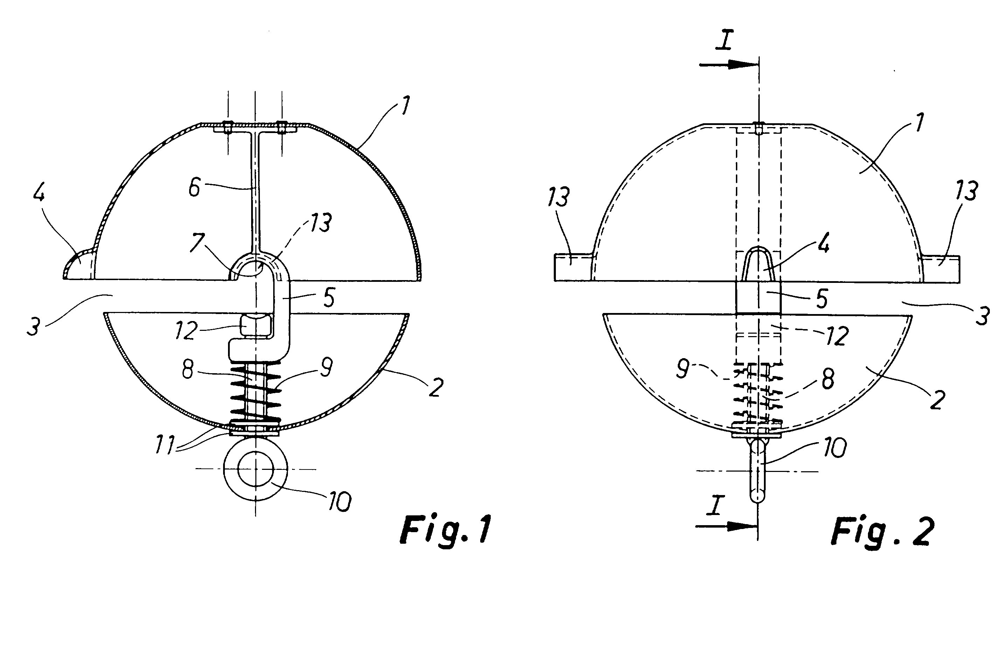

The invention will now be described in more detail with reference made to the accompanying drawing, in which
- fig. 1: shows a marker ball of the invention in section along a line I-I in fig. 2 and
- fig. 2: is a side view of the marker ball.

The ball includes a top spherical cap 1 and a bottom spherical cap 2, having therebetween a division plane 3 whereby a wire can be brought inside a generally C-shaped mounting element 5. From the top end of said mounting element 5 extends upwards a shaft 6 having the spherical cap 1 fastened to the top end thereof by means of rivets, screws or adhesive.

A clamping screw 8 extends through the lower prong of the mounting element 5 and is in threaded engagement with the mounting element 5 such that, upon turning the screw 8, a clamping pad 12 moves towards an arched surface 7 included in the top end of the mounting element 5 (or away from it depending on rotating direction). The screw 8 is capable of rotating relative to the clamping pad 12, whereby the clamping pad 12 does not rotate along with the screw 8 but only travels axially in view of not damaging a wire to be clamped between the clamping pad 12 and the surface 7.

Between the lower prong of the mounting element 5 and the bottom spherical cap 2 is a coil spring 9 surrounding the clamping screw 8 and flexibly propping the bottom spherical cap 2 to its lower position, said bottom spherical cap 2 being flexibly pivotable therefrom within a certain range. This pivoting facilitates the passage of a wire into or out of a gap 3 between the spherical caps. However, the spherical caps 1 and 2 retain their position if no external force upsets the relative position thereof.

The clamping screw 8 extends through the bottom spherical cap 2 and the bottom end of the screw 8 outside the ball is fitted with a ring 10 that can be grabbed with a hook-pointed implement for rotating the clamping screw 8. The selected design of this coupling element 10 is a ring since matching hook-pointed mounting rods are available in the marketplace. However, coupling elements of other shapes can also be used instead of the ring 10.

In order to perform a successful mounting of the ball from a boat, ice or the ground with a long mounting rod on a live wire, the bottom edge of the top spherical cap 1 is provided with an installation-facilitating cog 4, which also indicates on which side of the ball a wire is capable of being introduced inside the C-shaped mounting element 5. The installation-facilitating effect of the cog 4 is evident in such a manner that a wire sliding up the surface of the bottom spherical cap 2 collides with the cog 4 and, thus, is more easily guided into the gap 3.

As shown in the figures, the arched surface 7, which is included in the mounting element 5 and against which a wire is attached, is located essentially in the middle of a ball. In addition, the opposite edges of the top spherical cap 1 are provided with downwardly opening gutters 13 at an angle of 90° from the cog 4 for receiving a wire. The gutters 13 support the ball on a wire and preclude the passage of rain water inside the ball through the wire lead-in openings.

The top spherical cap 1 is slightly larger than the bottom spherical cap 2 whose edges are capable of squeezing inside those of the top spherical cap 1. When a wire is clamped in position by means of the screw 8, the bottom spherical cap 2 rises up to close the gap 3.

The spherical caps 1 and 2 are made of an insulating material, such as plastics. The lead-in of the screw 8 is provided on both sides thereof witn washers 11 for reinforcing the lead-in hole rims to receive loads that are created during the course of installation and by the action of the spring 9.

In a mounting method of the invention, the marker ball is mounted by the ring 10 on the end of a mounting rod (not shown). The long voltage-resistant mounting rod is used for lifting the ball to the adjacency of a wire and the wire is brought into the gap 3 between the caps 1, 2. This is followed by rotating the mounting rod for closing the caps 1, 2 against each other and the fastening elements 5, 8 inside the ball are caused to grab the wire.

As far as the marker ball is concerned, the invention is naturally by no means limited to the above exemplary embodiment but the structural details may vary in may ways within the scope of the annexed claims. When applying the invention, it is natural that the marker ball need not be spherical in shape but, instead, the shape can be oblong or somewhat angular.

## Claims

1. A marker ball fastenable to a wire from the ground or a boat for facilitating the detection of the wire, the ball comprising a top spherical cap (1) and a bottom spherical cap (2) with a gap (3) therebetween for bringing the wire inside a generally C-shaped mounting element (5) and for fastening the same against the mounting element by means of a clamping screw (8) gripping the mounting element, wherein from the top spherical cap (1) extends an installation-facilitating cog (4), which further indicates on which side of the ball a wire is capable of passing inside said C-shaped mounting element (5), said mounting element (5) being fastened to the top spherical cap (1) and held by a spring (9) at a distance from the bottom spherical cap (2) which is movable towards the top spherical cap by means of said clamping screw (8) against the force of said spring (9).

2. A marker ball as set forth in claim 1, **characterized** in that between the C-shaped mounting element (5) and the bottom spherical cap (2) is the coil spring (9) surrounding the clamping screw (8) and flexibly fixing the bottom spherical cap (2) to its position, from which the bottom spherical cap (2) is flexibly pivotable within a certain range.

3. A marker ball as set forth in claim 1 or 2, **characterized** in that the clamping screw (8) extends through the bottom spherical cap (2) and the clamping screw (8) has its lower end outside the ball fitted with a ring (10) which can be grabbed with a hook-pointed implement for rotating the clamping screw (8).

4. A marker ball as set forth in any of claims 1-3, **characterized** in that the C-shaped mounting element (5) is located in the middle of the ball, that the top spherical cap (1) is slightly larger than the bottom spherical cap (2) whose edges are capable of squeezing inside those of the top spherical cap (1), and that the opposite edges of said top spherical cap (1), at an angle of 90° from said cog (4), are provided with downwardly opening gutters (13) for receiving a wire, the bottoms of said gutters (13) and an inner surface (7) included in the arched top section of said mounting element (5) being located on the same line.

5. A method for mounting a marker ball according to one of the claims 1 to 4 on a live wire from the ground or a boat, **characterized** in that a marker ball consisting of two spherical caps (1, 2) is lifted with a voltage-resistant long mounting rod to the vicinity of a wire and the wire is brought into a gap (3) between the spherical caps, followed by using the mounting rod to close the spherical caps (1, 2) and/or the mounting elements (5, 8) inside the marker ball for grabbing such elements around the wire.

## Patentansprüche

1. Warnkugel, die an einer Leitung von der Erde oder einem Boot aus befestigt werden kann, zur Erleichterung der Wahrnehmung der Leitung, wobei die Kugel eine obere sphärische Kappe (1) und eine untere sphärische Kappe (2) mit einer Lücke (3) dazwischen zum Einbringen der Leitung in ein im wesentlichen C-förmiges Befestigungselement (5) und zu deren Befestigung am Befestigungselement mittels einer das Befestigungselement ergreifenden Klemmschraube (8) aufweist, wobei sich aus der oberen sphärischen Kappe (1) eine die Anbringung erleichternde Nase (4) erstreckt, welche weiterhin anzeigt, auf welcher Seite der Kugel eine Leitung in das C-förmige Befestigungselement (5) gelangen kann, und das Befestigungselement (5) an der oberen sphärischen Kappe (1) befestigt und durch eine Feder (9) in einem Abstand zur unteren sphärischen Kappe (2) gehalten ist, welche mittels der Klemmschraube (8) gegen die Kraft der Feder (9) zur oberen sphärischen Kappe hin bewegbar ist.

2. Warnkugel nach Anspruch 1, **dadurch gekennzeichnet,** daß zwischen dem C-förmigen Befestigungselement (5) und der unteren sphärischen Kappe (2) die die Klemmschraube (8) umgebende und die untere sphärische Kappe (2) flexibel in ihrer Position fixierende Schraubenfeder (9) ist, wobei die untere sphärische Kappe (2) innerhalb eines bestimmten Bereiches flexibel aus ihrer Position schwenkbar ist.

3. Warnkugel nach Anspruch 1 oder 2, **dadurch gekennzeichnet,** daß die Klemmschraube (8) sich durch die untere sphärische Kappe (2) erstreckt und das untere Ende der Klemmschraube (8) außerhalb der Warnkugel mit einem Ring (10) versehen ist, welcher mit einem hakenartig auslaufenden Werkzeug zur Drehung der Klemmschraube (8) ergriffen werden kann.

4. Warnkugel nach einem der Ansprüche 1 bis 3, **dadurch gekennzeichnet,** daß das C-förmige Befestigungselement (5) in der Mitte der Kugel angeordnet ist, daß die obere sphärische Kappe (1) geringfügig größer als die untere sphärische Kappe (2) ist, so daß deren Kante in diejenige der oberen sphärischen Kappe (1) gepreßt werden kann, und daß die gegenüberliegenden Kanten der oberen sphärischen Kappe (1) in einem Winkel von 90° zur Nase (4) mit sich nach unten öffnenden Rinnen (13) zur Aufnahme einer Leitung versehen sind, wobei die Unterseiten der Rinnen (13) und eine im gebogenen oberen Abschnitt des Befestigungselements (5) eingeschlossene Innenfläche (7) auf derselben Linie angeordnet sind.

5. Verfahren zur Befestigung einer Warnkugel nach einem der Ansprüche 1 bis 4 auf einer in Betrieb befindlichen Leitung von der Erde oder einem Boot aus, **dadurch gekennzeichnet,** daß eine aus zwei sphärischen Kappen (1, 2) bestehende Warnkugel mit einer spannungsfesten langen Montagestange in die Nähe einer Leitung gehoben und die Leitung in eine Lücke (3) zwischen den sphärischen Kappen gebracht wird, worauf die Verwendung der Befestigungsstange zum Schließen der sphärischen Kappen (1, 2) und/oder der Befestigungselemente (5, 8) innerhalb der Warnkugel zum Greifen dieser Elemente um die Leitung folgt.

## Revendications

1. Sphère de marquage destinée à être fixée sur un câble depuis le sol ou un bateau afin de faciliter la détection du câble, la sphère comprenant une calotte sphérique supérieure (1) et une calotte sphérique inférieure (2) entre lesquelles se trouve un espace (3) permettant d'amener le câble à l'intérieur d'un élément de fixation (5) globalement en forme de C et de fixer ce dernier contre l'élément de fixation au moyen d'une vis de blocage (8) serrant l'élément de fixation, dans laquelle à partir de la calotte sphérique supérieure (1) s'étend un alluchon (4) facilitant l'installation qui indique en outre le côté de la sphère sur lequel peut passer un câble à l'intérieur dudit élément de fixation en forme de C (5), ledit élément de fixation (5) étant fixé à la calotte sphérique supérieure (1) et maintenu par un ressort (9) à une certaine distance de la calotte sphérique inférieure (2) qui peut se déplacer vers la calotte sphérique supérieure au moyen de ladite vis de blocage (8) s'opposant à la force dudit ressort (9).

2. Sphère de marquage selon la revendication 1, caractérisée en ce que, entre l'élément de fixation en forme de C (5) et la calotte sphérique inférieure (2), se trouve le ressort à boudin (9) entourant la vis de blocage (8) et fixant de manière flexible la calotte sphérique inférieure (2) dans sa position, à partir de laquelle la calotte sphérique inférieure (2) peut pivoter de manière flexible sur une certaine distance.

3. Sphère de marquage selon la revendication 1 ou 2, caractérisé en ce que la vis de blocage (8) s'étend à travers la calotte sphérique inférieure (2) et la vis de blocage (8) a son extrémité inférieure située à l'extérieur de la sphère, munie d'un anneau (10) qui peut être accroché à un instrument dont la pointe forme un crochet pour faire tourner la vis de blocage (8).

4. Sphère de marquage selon l'une quelconque des revendications 1 à 3, caractérisée en ce que l'élément de fixation (5) en forme de C est situé au milieu de la sphère, en ce que la calotte sphérique supérieure (1) est légèrement plus grande que la calotte sphérique inférieure (2) dont les bords peuvent être pressés à l'intérieur de ceux de la calotte sphérique supérieure (1), et en ce que les bords opposés de ladite calotte sphérique supérieure (1), à un angle de 90° par rapport audit alluchon (4), sont pourvus de rigoles ouvertes vers le bas (13) permettant de loger un câble, les parties inférieures desdites rigoles (13) et une surface intérieure (7) comprise dans la section supérieure arquée dudit élément de fixation (5) situé sur la même ligne.

5. Procédé de fixation d'une sphère de marquage selon l'une quelconque des revendications 1 à 4, sur un câble sous tension depuis le sol ou un bateau, caractérisé en ce qu'une sphère de marquage se composant de deux calottes sphériques (1, 2) est soulevée par une longue tige de fixation résistant à la tension au voisinage d'un câble et le câble est amené dans un espace (3) entre les calottes sphériques, à la suite de quoi on utilise la tige de fixation pour fermer les calottes sphériques (1, 2) et/ou les éléments de fixation (5, 8) à l'intérieur de la sphère de marquage pour accrocher ces éléments autour du câble.
